(19)

**Europäisches Patentamt**
**European Patent Office**
**Office européen des brevets**

(11) **EP 3 418 761 A1**

(12) **EUROPEAN PATENT APPLICATION**

(43) Date of publication:
**26.12.2018 Bulletin 2018/52**

(51) Int Cl.:
***G01S 5/02*** (2010.01)

(21) Application number: **17177179.3**

(22) Date of filing: **21.06.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Technische Universität Graz**
**8010 Graz (AT)**

(72) Inventors:
 • **WITRISAL, Klaus**
   **8042 Graz (AT)**
 • **KULMER, Josef**
   **8183 Floing (AT)**

 • **RATH, Michael**
   **8410 Wildon (AT)**
 • **RÖMER, Kay Uwe**
   **8042 Graz (AT)**
 • **GROßWINDHAGER, Bernhard**
   **4452 Ternberg (AT)**
 • **BOANO, Carlo Alberto**
   **8010 Graz (AT)**
 • **GENTILI, Fabrizio**
   **06033 Cannara (Perugia) (IT)**
 • **BAKR, Mustafa Safaa Ahmed**
   **Leeds LS6 2 TX (GB)**

(74) Representative: **Weiser & Voith**
**Patentanwälte Partnerschaft**
**Kopfgasse 7**
**1130 Wien (AT)**

(54) **METHOD AND SYSTEM FOR DETERMINING A POSITION**

(57)     The present invention relates to a method and a system (6) for determining a position ($p_n$) of a movable agent device (3) in a reflective environment (2) of which a geometric model (1) is known and in which at least one anchor device (4, 5) has a predetermined position ($a_1$, $a_2$), comprising: transmitting a first and a second ultra-wideband pulse signal via a first and a second uni-directional antenna of the anchor device (4), respectively, and receiving respective received signals via an omni-directional antenna of the agent device (3); defining a set of candidate positions within said geometric model (1), and, for each candidate position, calculating a set of multipath components as a function of the geometric model (1), directivities of the uni-directional antennas and the position ($a_1$) of the anchor device (4); determining a deviation measure between the calculated multipath components and said received signals; and obtaining the position ($p_n$) of the agent device (3) as the candidate position with the minimum deviation measure.

*Fig. 1*

Printed by Jouve, 75001 PARIS (FR)

**Description**

The present invention relates to a method for determining a position of a movable agent device in a reflective environment, a geometric model of which is known, by means of at least one anchor device having a predetermined position in said environment. The invention further relates to a system configured to execute this method.

High-accuracy localisation of objects, herein also called "agent devices", is key in manifold applications. While determining the position of an object in an average outdoor environment is conventionally done by means of radio triangulation with satellites and/or terrestrial anchor devices of known positions, such as mobile phone base stations etc., such localisation is impeded - or even inhibited - in a reflective environment, particularly in an indoor environment. However, the importance of accurate localisation in such environments is steadily increasing due to new applications, e.g. in device-to-device-communication, in Internet of Things applications, or in Assisted Living, like activity recognition, behavioural pattern discovery, anomaly detection etc.

Accurate radio positioning in reflective - e.g. indoor - environments can, amongst others, be achieved with time-of-flight methods based on, e.g., (ultra-)wideband signals. In harsh scenarios the dense multipath propagation can significantly deteriorate the probing signals. To tackle this issue, K. Witrisal et al., "Bandwidth scaling and diversity gain for ranging and positioning in dense multipath channels," IEEE Wireless Communications Letters, vol. 5, no. 4, pp. 396-399, Aug 2016, propose to increase the signal bandwidth, allowing for an increased time resolution such that the interfering multipath propagation is resolved in time from the useful line-of-sight (LOS) component. At ultra-wide bandwidth (UWB), one can even exploit - generally undesirable - multipath propagation, as shown *by* K. Witrisal et al., "High-accuracy localization for assisted living," IEEE Signal Processing Magazine, 2016.

Alternatively, multiple measurements can be combined to resolve the multipath in the angular domain, which reduces the bandwidth required to achieve a desired accuracy. This can be accomplished by combining signals originating from different transmitters distributed at known positions over the environment, or by using array processing techniques where the measurements of many omni-directional antennas are used. The latter case, using wideband antennas, is well known to yield highly accurate position measurements, e.g. from Y. Shen et al., "On the accuracy of localization systems using wideband antenna arrays," IEEE Transactions on Communications, vol. 58, no. 1, pp. 270-280, January 2010, from Y. Han et al., "Performance limits and geometric properties of array localization," IEEE Transactions on Information Theory, vol. 62, no. 2, pp. 1054-1075, Feb 2016, or from B. Allen et al., "Ultra wideband antennas and propagation for communications, radar and imaging", John Wiley & Sons, 2006.

However, both aforementioned approaches require a lot of infrastructure and must be capable to coherently process the received signals.

It is an object of the invention to provide a method for determining a position of a movable agent device in a reflective environment which is both accurate and efficient.

According to a first aspect of the invention, this object is achieved with a method of the type mentioned above, comprising:

transmitting a first ultra-wideband pulse signal via one of a first uni-directional antenna of a first device and an omni-directional antenna of a second device, wherein said first device is one of the agent device and the anchor device and said second device is the other one of the agent device and the anchor device, and receiving a first received signal containing direct and/or reflected components of the transmitted first pulse signal via the other one of said first uni-directional antenna and said omni-directional antenna;

transmitting a second ultra-wideband pulse signal via one of a second uni-directional antenna of said first device and said omni-directional antenna, wherein the first and second uni-directional antennas have different directivities, and receiving a second received signal containing direct and/or reflected components of the transmitted second pulse signal via the other one of said second uni-directional antenna and said omni-directional antenna;

prior to, during or after said transmitting and receiving, defining a set of candidate positions within said geometric model, and, for each candidate position, calculating a set of multipath components, each having an amplitude and a delay, as a function of the geometric model, the directivities of the uni-directional antennas, the position of the anchor device and said candidate position;

determining, for each candidate position, a deviation measure between the multipath components calculated for said candidate position on the one hand and said first and second received signals on the other hand; and

obtaining the position of the agent device as the candidate position with the minimum deviation measure.

Using directive antennas for indoor positioning was previously proposed by A. Cidronali et al., "Analysis and performance of a smart antenna for 2.45-GHz single-anchor indoor positioning," IEEE Transactions on Microwave Theory and Techniques, vol. 58, no. 1, pp. 21-31, 2010, or by G. Giorgetti et al., "Switched beam antenna design principles for angle of arrival estimation," in Wireless Technology Conference, 2009. EuWIT 2009. European. IEEE, 2009, pp. 5-8. However, these publications suggest to use received signal strength measurements from narrowband antenna elements to augment angle-of-arrival estimation.

According to the present invention, the received signals of transmitted ultra-wideband pulse signals are used to perform multipath resolved positioning where detectable multipath components (MPC) are associated with the environment. The necessity of coherently processing the received signals does not arise. The uni-directional antennas reduce interfering multipath propagation and thus the required bandwidth and facilitate resolving MPCs. Moreover, additional anchor devices are unnecessary, whereby the method reduces the overall complexity both in terms of devices to be installed and of computational efforts for controlling the devices and determining the agent device's position. It shall be understood that the first device may comprise more than two uni-directional antennas of different directivities, in which case said transmitting and receiving steps are executed in a corresponding number of times.

Anchor and agent devices are, in general, synchronized with each other as known in the art, e.g. by two-way ranging, for determining absolute delays. However, the (relative) delays between direct and reflected components can be used in addition to or instead of said synchronization for alignment of the received signals.

The term "directivity" herein comprises both a pattern of radiation and an orientation of a respective uni-directional antenna. The patterns of radiation of the uni-directional antennas are known while their orientations are either known, e.g. when the anchor device is said first device, or are determined, e.g., based on candidate orientations of the directivities used in said steps of calculating the set of multipath components and determining the deviation measure and/or by means of an optional inertial measurement unit of said first device.

Moreover, the amplitudes of said multipath components can either be determined from the geometric model as a function thereof or derived from said first and second received signals as will be described in more detail below.

In an advantageous embodiment, the first and second pulse signals are differently coded sequences of pulses, wherein said steps of transmitting the first and second pulse signals overlap in time. By partly or even completely overlapping transmission of multiple pulse signals, the steps of transmitting said pulse signals and receiving said received signals are stacked and can thereby be accelerated.

While the first and second pulse signals can be transmitted via the first and second uni-directional antennas or via the omni-directional antenna, either in a coded and overlapping manner, in an uncoded and simultaneous manner or in a sequential manner, in a preferred embodiment, the first and second pulse signals are transmitted via the first and second uni-directional antennas, respectively, wherein said steps of transmitting the first and second pulse signals are executed sequentially. Thereby, e.g., switched uni-directional antennas can be used at said first device, which antennas are connected to a single transmitter thereof the first device. In this embodiment, the first device has a simple physical structure. Moreover, each of the transmitted pulse signals can optionally consist of a single ultra-wideband pulse, whereby the steps of transmitting said pulse signals and receiving said received signals are condensed.

According to a particularly efficient variant, the deviation measure is determined using a method of least squares.

For improving the accuracy of the position determination, it is advantageous, when, prior to obtaining the position of the agent device, the steps of defining, calculating and determining are repeated for at least one further set of candidate positions in proximity of the candidate position with the minimum deviation measure of the preceding set. Thereby the resolution of the set of candidate positions can be substantially increased at low increase of computational efforts. Of course, such a repetition can be executed more than once, if desired.

According to a further favourable embodiment, said deviation measure is determined using a likelihood function, the minimum deviation corresponding to a maximum likelihood determined according to

$$\hat{\boldsymbol{p}}_{\text{Alg1}} = \operatorname*{argmax}_{\boldsymbol{p} \in \mathcal{P}} \prod_m p(\boldsymbol{r}_m | \boldsymbol{p})$$

wherein

$P$     is the set of candidate positions $\boldsymbol{p}$;

$\boldsymbol{r}_m$     is a vector of samples of the received signals of the $m^{th}$ uni-directional antenna of the first device, which is modelled as $\boldsymbol{r}_m = \boldsymbol{S}(\tau)\alpha_m + \omega_m$;

$\boldsymbol{S}(\tau)$     is a matrix of the transmitted pulse signals with delays $\tau$ corresponding to a set of $K$ multipath components;

$\alpha_m$     is a vector of the amplitudes of said multipath components transmitted or received via the $m^{th}$ antenna; and

$\boldsymbol{w}_m$     is a vector of noise of said $m^{th}$ antenna.

In an alternative, particularly advantageous embodiment, said deviation measure is determined using a likelihood function, the minimum deviation measure corresponding to a maximum likelihood determined according to

$$\hat{\boldsymbol{p}}_{\text{Alg2}} = \underset{\boldsymbol{p}\in\mathcal{P}}{\mathrm{argmax}}\ p(\boldsymbol{r}|\boldsymbol{p})$$

wherein

$P$      is the set of candidate positions $\boldsymbol{p}$;

$\boldsymbol{r}$      is a vector of samples of the received signals, transmitted or received via the uni-directional antennas of the first device, which is modelled as $\boldsymbol{r} = \boldsymbol{X}(\tau, \{b_m(\phi_k)\})\alpha + \omega$;

$\boldsymbol{X}(\tau,\{b_m(\phi_k)\})$      is a matrix containing the transmitted pulse signals and the directivities with

$$\boldsymbol{X}(\boldsymbol{\tau}, \{b_m(\phi_k)\}) = \begin{bmatrix} b_1(\phi_1)s(\tau_1) & \ldots & b_1(\phi_K)s(\tau_K) \\ \vdots & & \vdots \\ b_M(\phi_1)s(\tau_1) & \ldots & b_M(\phi_K)s(\tau_K) \end{bmatrix};$$

$b_m(\phi_k)$      is the directivity of the $m^{th}$ uni-directional antenna of the first device;

$\phi_k$      is an angle of departure or arrival of the $k^{th}$ multipath component at the first device;

$\boldsymbol{S}(\tau_k)$      is a signal vector of the transmitted pulse signal with delay $\tau_k$ of the $k^{th}$ multipath component;

$\alpha$      is a vector of the amplitudes of the multipath components; and

$\boldsymbol{w}$      is a vector of noise of the uni-directional antennas.

Both aforementioned embodiments for determining said deviation measure are notably efficient. However, the second of the two embodiments yields even more accurate and distinct results for the position of the movable agent device even at lower bandwidth of the transmitted ultra-wideband pulse signals.

For further increasing the efficiency of the present method by omitting insignificant multipath components, it is preferred that the number of multipath components in said set is determined on the basis of a signal to interference plus noise ratio falling below a given threshold, said ratio being estimated according to

$$\text{SINR}_{k,m} = \frac{|\alpha_k|^2|b_m(\phi_k)|^2}{N_0 + T_{\text{p}} \int\limits_{\phi} |b_m(\phi)|^2 S_\nu(\tau_k, \phi)\ \mathrm{d}\phi}$$

wherein

$\text{SINR}_{k,m}$      is the signal to interference plus noise ratio of the $k^{th}$ multipath component and the $m^{th}$ uni-directional antenna of the first device;

$\alpha_k$      is the amplitude of the $k^{th}$ multipath component;

$b_m(\phi_k)$      is the directivity of the $m^{th}$ uni-directional antenna of the first device;

$\phi_k$      is an angle of departure or arrival of the $k^{th}$ multipath component at the first device;

$\tau_k$      is the delay of the $k^{th}$ multipath component;

$N_0$      denotes noise;

$T_p$      is an effective pulse duration of the transmitted pulse signal; and

$S_v(\tau_k, \phi)$      is a delay-angle power spectrum describing the power of the interfering (diffuse) multipath components.

For high efficiency of the method, said threshold may be set, to a value between 3 and 10 dB, e.g. about 5 dB.

For considering both the directivities of the uni-directional antennas and a quality measure of the respective direct and/or reflected components of the first and second received signals, it is favourable that each of the multipath components in said set is weighted on the basis of said signal to interference plus noise ratio in said step of determining the deviation measure. By weighting the multipath components higher where first and second received signals have higher quality (and vice versa), the accuracy of the method is increased.

According to a second aspect, the present invention creates a system for determining a position of a movable agent device in a reflective environment, comprising:

said agent device, and

at least one anchor device at a predetermined position in said environment,

wherein the system is configured to execute the method mentioned above, wherein one of the agent device and the anchor device is said first device and the other one of the agent device and the anchor device is said second device.

In a favourable variant thereof, said uni-directional antennas are switched beam antennas.

Relating to advantages and further particular embodiments of the system, it is referred to the above statements on the method of the invention.

The invention will now be described in further detail by means of exemplary embodiments thereof under reference to the enclosed drawings in which:

Fig. 1 shows a geometrical model of an exemplary reflective environment with an agent device and two anchor devices, in a top view;

Figs. 2a to 2f show three examples of position likelihood functions, each for pulse signals of two different bandwidths, the first example showing the state of the art method (Figs. 2a and 2b) and the remaining two examples showing a first (Figs. 2c and 2d) and a second embodiment of the present invention (Figs. 2e and 2f), in a logarithmic distribution over the geometrical model of Fig. 1; and

Figs. 3a and 3b show cumulative distribution functions of position errors of the three examples of Figs. 2a to 2f at the higher (Fig. 3a) and the lower bandwidth (Fig. 3b) scenario in a respective diagram.

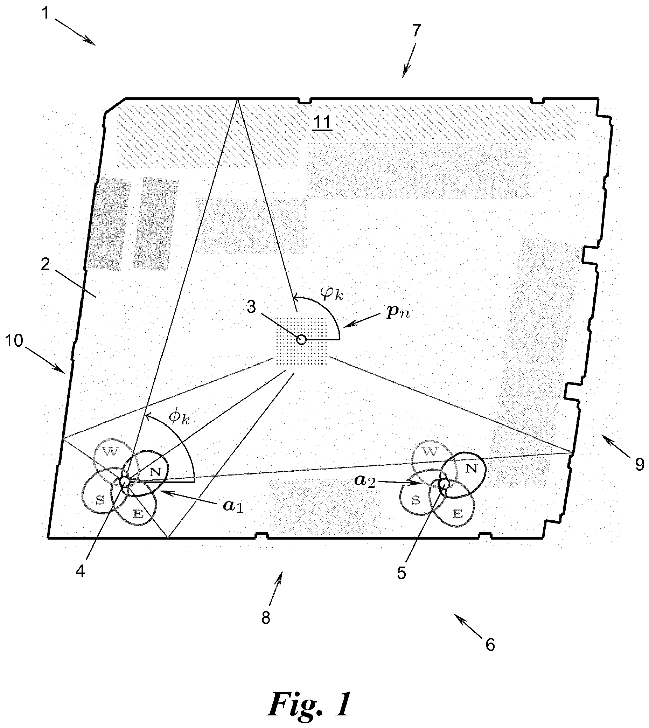

Fig. 1 shows a geometric model 1 of a reflective indoor environment 2 (herein also referred to as "floorplan"), wherein an object or agent device (herein also called "agent node" or "agent") 3 is positioned at a location $p_n$ that is to be determined. An anchor device (herein also called "anchor node" or "anchor") 4 has a predetermined position $a_1$ in the environment 2. An optional further anchor 5 is located at a further predetermined position $a_2$. A system 6 for determining the position $p_n$ of the agent 3 comprises the agent 3 and at least one anchor 4, 5 and, in some embodiments, an optional central processing device (not shown) communicating with and supporting the agent 3 and the at least one anchor 4, 5 in determining the position $p_n$.

The reflective environment 2 in the example of Fig. 1 is delimited to the west and to the east by two walls of plaster board 7, 8, respectively, and to the north by a row of windows 9 and has a whiteboard 10 at the south. Moreover, several obstacles, e.g. laboratory equipment, are placed in a hatched area 11 next to the western plaster board 7.

We propose employing multiple uni-directional antennas (herein also called "directional antennas") which have different directivities (herein also referred to as "beampatterns") and are capable of transmitting ultra-wideband (UWB) pulse signals and/or receiving respective received signals containing direct and/or reflected components of the transmitted pulse signals. Each directional antenna covers a part of the azimuth plane. Two or more of the directional antennas are either switchably connected to a single transmitter and/or receiver, or each directional antenna has its own transmitter and/or receiver which are part of the anchors 4, 5, respectively. One of said agent device 3 and said anchor device 4, 5 has said uni-directional antennas and the other one of said agent device 3 and said anchor device 4, 5 has said omni-directional antenna. The directivities of the uni-directional antennas are either known or determined.

The direct and reflected components of the transmitted pulse signals are also referred to as multipath components (MPCs) herein, especially, where both the transmitted pulse signals and the received signals are modelled. Based on the present model, statistical error bounds in determining the position are discussed and two exemplary positioning algorithms are described and subsequently evaluated for the given arrangement of Fig. 1.

SIGNAL MODEL

We consider an agent node 3 aiming at finding its position $p_n$ using radio frequency measurements from one anchor node 4, 5, located at known position $a_1$, $a_2$. The agent node 3 is equipped with a single omni-directional antenna. Each anchor node 4, 5 employs a sector antenna which consists of $M$ directional antennas as illustrated in Fig. 1. Two anchors 4, 5 are shown, equipped with $M = 4$ antennas, each covering one sector of the azimuth angle plane with a half-power beamwidth of about 90 °. Antenna $m$ transmits the signal $s\,(t)$ and the sampled signal $r_m \in \mathbb{C}^{N \times 1}$ is observed at the agent. We model this received signal as a sum of $K$ deterministic MPCs plus contributions of diffuse multipath (DM) $v_m$ and additive, white Gaussian noise (AWGN) $w_m$, according to

$$r_m = \sum_{k=1}^{K} \alpha_k b_m(\phi_k) s(\tau_k) + \nu_m + w_m \qquad (1)$$

Therein, the first term on the right-hand-side describes the deterministic MPCs as replicas of the transmitted signal $s(t)$. Each replica is delayed by $\tau_k$ which is determined by the length of the path between the agent and the anchor. Reflected paths can be modelled by virtual anchors whose positions are mirrored at the respective reflecting wall and are computed from the geometric environment model, e.g., as proposed by K. Witrisal et al., "High-accuracy localization for assisted living," IEEE Signal Processing Magazine, 2016. We use a vector notation with $s(\tau_k) = [s(0 \cdot T_s - \tau_k), s(1 \cdot T_s - \tau_k),..., s((N-1) \cdot T_s - \tau_k)]^T$ where $T_s$ is the sampling period and the signal is normalized according to $\|s(t)\|^2 = 1$. For each MPC, the environmental model is also used to determine the angle-of-departure at the anchor denoted by $\phi_k$, as well as the angle-of-arrival at the agent denoted by $\varphi_k$. This is illustrated in Figure 1, where both angles are shown for the MPC that comes from the "plaster board west" surface. The amplitude of each MPC is determined on the one hand by $\alpha_k$ which covers propagation effects, e.g. path loss or attenuation at the reflection point, and on the other hand by the complex-valued beampattern described by $b_m(\phi_k)$. For simplicity, we consider only the directional characteristics at the anchor side, assuming a uniform radiation pattern at the agent.

The second term of equation (1) describes the DM which models interfering MPCs that cannot be associated to an environmental model. It is described as a zero-mean Gaussian random process, shaped by the transmitted signal $s(t)$. The AWGN exhibits a constant double-sided power spectral density of $N_0/2$.

POSITION ERROR BOUND

We use the position error bound (PEB, proposed by Y. Shen et al., "Fundamental limits of wideband localization; part I: a general framework", IEEE Transactions on Information Theory, 2010) as derived, e.g., in K. Witrisal et al., "High-accuracy localization for assisted living," IEEE Signal Processing Magazine, 2016 or in E. Leitinger et al., "Evaluation of positionrelated information in multipath components for indoor positioning," IEEE Journal on Selected Areas in Communications, 2015, to analyze the performance gain of the sector antenna when used for multipath-assisted positioning. It is defined as

$$\mathbb{E}\{\|p - \hat{p}\|^2\} \geq \mathrm{tr}\{\mathcal{I}_p^{-1}\} \qquad (2)$$

where tr{·} denotes the trace operator and $\mathcal{I}_p$ is the Fisher information matrix of the position $p$ to be determined (with $\hat{p}$ being an estimated position) written by

$$\mathcal{I}_p = \frac{8\pi^2\beta^2}{c^2} \sum_k \sum_m \mathrm{SINR}_{k,m} D_r(\varphi_k) \qquad (3)$$

Here, c is the speed of light, $\beta$ is the mean-square bandwidth of the transmitted pulse and $D_r(\varphi_k) = e(\varphi_k)e(\varphi_k)^T$ is called the ranging direction matrix that is used to relate the ranging information intensity to the direction of $\varphi_k$. The contribution of each individual MPC is quantified by its signal-to-interference-plus-noise ratio (SINR), here defined by

$$\mathrm{SINR}_{k,m} = \frac{|\alpha_k|^2 |b_m(\phi_k)|^2}{N_0 + T_p \int_\phi |b_m(\phi)|^2 S_\nu(\tau_k, \phi)\, \mathrm{d}\phi} \qquad (4)$$

where $S_\nu(\tau, \phi)$ describes the angle-delay power spectrum of the DM and $T_p$ is a pulse duration parameter of waveform $s(t)$.

From equation (3), the gain of exploiting M measurements is seen to be expressed by $\sum_m \mathrm{SINR}_{k,m}$, because $D_r(\varphi_k)$ is the same for all $m$. This result is based on the assumption that (i) only ranging information is exploited for solving the positioning problem (i.e. angle information is neglected because the angle resolution is assumed to be very coarse), and (ii) the DM and AWGN are independent for individual measurements m. To evaluate the potential performance gain, we assume a uniform angular power spectrum $S_v(\tau_k, \phi) = S_v(\tau_k)$. Furthermore, since the efficiency of an antenna is not related to its directivity, we assume that its total power gain is independent of the beam pattern, expressed as $\int_{-\pi}^{\pi} |b_m(\phi)|^2 \, \mathrm{d}\phi = 1$. We thus get

$$\sum_m \mathrm{SINR}_{k,m} \approx \frac{|\alpha_k|^2}{N_0 + T_\mathrm{p} S_\nu(\tau_k)} \sum_m |b_m(\phi_k)|^2 \qquad (5)$$

showing that the SINR gain is approximated as the sum of the antenna power gains at $\phi_k$.

DERIVATION OF THE POSITIONING ALGORITHM

The previous section investigated the signal model and the expected position error using performance bounds. In the following, we derive a method for multipath-assisted indoor localization using a single anchor only. We will exemplify two algorithms: Algorithm I treats the measurements as independent and Algorithm II incorporates the antenna gain patterns to get the agent's position.

In Algorithm I we assume that the path amplitudes, including the beampatterns, $\alpha_{k,m} = \alpha_k b_m(\phi_k)$, are estimated independently from each measurement m as nuisance parameters. Stacking the signals $s(\tau_k)$ in the signal matrix $S(\tau) = [s(\tau_1),...,s(\tau_K)]$ with the delays $\tau = [\tau_1,...\tau_K]^\mathrm{T}$ and correspondingly the amplitudes in $\alpha_m = [\alpha_{1,m},...,\alpha_{K,m}]^\mathrm{T}$, the signal model is

$$r_m = S(\tau)\alpha_m + w_m \qquad (6)$$

where we neglect the contribution by the DM. With this AWGN noise model, the likelihood function of the received signal $r_m$ conditioned on $\alpha_m$ and $\tau$ follows as

$$p(r_m|\alpha_m, \tau) \propto \exp\left\{ -\|r - S(\tau)\alpha_m\|^2 \right\} \qquad (7)$$

In order to estimate the agent's position, we express the delays $\tau$ as a function of the agent's position $p$ using the geometric model of the environment. With hypothesized $\tau$, the amplitudes are estimated using least-squares, e.g. according to G. H. Golub et al., "The differentiation of pseudo-inverses and nonlinear least squares problems whose variables separate", SIAM Journal on numerical analysis, vol. 10, no. 2, pp. 413-432, 1973,

$$\hat{\alpha}_m = \left(S^\mathrm{H}(\tau)S(\tau)\right)^{-1} S^\mathrm{H}(\tau)r_m \qquad (8)$$

Stacking the measurements in $r = [r_1^\mathrm{T}, \cdots, r_M^\mathrm{T}]^\mathrm{T}$ then the assumption of independent measurements and amplitudes yields

$$p(r|p) = \prod_m p(r_m|p) \qquad (9)$$

and the maximum likelihood estimation of the agent position $\hat{p}_{\mathrm{Alg1}}$ follows as

$$\hat{p}_{\mathrm{Alg1}} = \underset{p \in \mathcal{P}}{\mathrm{argmax}} \prod_m p(r_m|p) \qquad (10)$$

with the set P containing candidate positions of the agent (herein also called "hypothesized" agent positions) within the communication range to the anchor.

Algorithm II explicitly employs the complex-valued beampatterns $\{b_m(\cdot)\}$ to estimate the MPC amplitudes $\alpha_k$

jointly from all measurements m = 1,..., M using

$$r = X(\tau, \{b_m(\phi_k)\})\alpha + w \qquad (11)$$

where

$$X(\tau, \{b_m(\phi_k)\}) = \begin{bmatrix} b_1(\phi_1)s(\tau_1) & \dots & b_1(\phi_K)s(\tau_K) \\ \vdots & & \vdots \\ b_M(\phi_1)s(\tau_1) & \dots & b_M(\phi_K)s(\tau_K) \end{bmatrix}$$

and $\alpha = [\alpha_1,...,\alpha_K]^T$ and $w$ as AWGN. The likelihood function follows in an equivalent fashion as equation (7) with the maximum likelihood solution of $\hat{p}_{\text{Alg2}}$ according to

$$\hat{p}_{\text{Alg2}} = \underset{p \in \mathcal{P}}{\text{argmax}} \; p(r|p) \qquad (12)$$

where we expressed the conditionals $\tau$ and $\{b_m(\phi_k)\}$ by the agent's position $p$. The amplitudes $\alpha$ result equivalently to equation (8). Assuming non-overlapping MPCs, the amplitudes are

$$\hat{\alpha}_k = \frac{\sum_{m=1}^{M} b_m^*(\phi_k)s^H(\tau_k)r_m}{\sum_{m=1}^{M} |b_m(\phi_k)|^2} = \frac{\sum_{m=1}^{M} b_m^*(\phi_k)\hat{\alpha}_{k,m}}{\sum_{m=1}^{M} |b_m(\phi_k)|^2} \qquad (13)$$

with $\hat{\alpha}_{k,m} = s^H(\tau_k)r_m$ at the right-hand-side of equation (13) . It shows that the estimated amplitudes $\{\hat{\alpha}_k\}$ of Algorithm II are a weighted average of the individual amplitudes $\{\hat{\alpha}_{k,m}\}$ in Algorithm I.

EVALUATION

In this section, we evaluate the derived position performance bound in the above Section *Position Error Bound* and the achieved accuracy of the multipath-assisted indoor localization algorithms.

a) Measurement setup

We placed one agent 3 at $p_n$ and two anchors 4, 5 at positions $a_1$ and $a_2$, respectively, as illustrated in Fig. 1. The anchors 4, 5 were equipped with M = 4 directive antennas, equally spaced on a circle with radius of 2 cm at center $a_1$ and $a_2$, respectively. The antennas were aligned such that their mainlobes point at different directions, named North (N), West (W), South (S) and East (E), each 90° apart as illustrated in Fig. 1. The measurements between the agent 3 with its omni-directional antenna and each directional antenna were performed using an Ilm-sens Correlative Channel Sounder. Subsequently each measurement was convolved by a raised cosine pulse. For a comparison of the impact of bandwidth on the estimated SINRs, we used (i) a pulse duration of $T_p$ = 0.5 ns (equivalent to a bandwidth of 2 GHz) with a roll-off factor *of R* = 0.5 and (ii) a pulse duration of $T_p$ = 2.4 ns (bandwidth of 500 MHz) with a roll-off factor of *R* = 0.9. The second parameters have been found to model Channels 2 and 5 of the recently available DecaWave DW1000 UWB transceiver, as known, e.g., from J. Kulmer et al., "Using DecaWave UWB Transceivers for High-accuracy Multipath-assisted Indoor Positioning", in IEEE ICC 2017 Workshop on Advances in Network Localization and Navigation (ANLN), 2017. We placed the agent 3 at $n \in \{1,..., 210\}$ different positions on a 15 x 14 grid with 5 cm spacing, resulting in 420 channel measurements. For a comparison we repeated the experiment using omni-directional antennas on both anchor 4, 5 and agent 3 nodes.

The complex-valued beampattern $b_m(\cdot)$ was available as a codebook in a resolution of 10°. We used linear interpolation to evaluate the beampattern, given a specific angle. The spatial offset between the directive antennas results in a phase shift of the carrier frequency as a function of the MPC angle-of-departure. For simplicity, we considered this phase shift already in the beampattern.

b) Evaluation of performance bounds

We evaluate the SINR values of individual MPCs which quantify their contributions to the PEB in equation (2) via equation (3). The following Tables I and II report the estimated SINR values for selected MPCs for the two anchor positions $a_1$ (top of Tables I and II, respectively) and $a_2$ (bottom of Tables I and II, respectively) and the pulse durations of $T_p$ = 0.5 ns with the roll-off factor $R$ = 0.5 (Table I) and $T_p$ = 2.4 ns with the roll-off factor of $R$ = 0.9 (Table II).

The SINRs are reported for each directive antenna based on the estimated amplitudes $\hat{\alpha}_{k,m}$. The SINR of *Sec* is based on amplitude estimation considering the overall amplitude in equation (13) while *Added* denotes the (not weighted) sum of SINRs of N+W+S+E as modelled by equation (5). For comparison we also show the SINRs for an omni-directional antenna at the anchor (*Omni*).

Table I

| MPC | N | W | S | E | Sec | Added | Omni |
|---|---|---|---|---|---|---|---|
| *LOS* | 9.0 | 21.5 | 23.6 | 18.3 | 27.7 | 26.5 | 24.8 |
| *plasterb east* | -9.3 | 0.3 | 1.9 | 1.8 | -∞ | 6.3 | 2.6 |
| *plasterb west* | -5.1 | -0.8 | -∞ | -∞ | -∞ | 0.6 | -∞ |
| *window* | 15.4 | 7.6 | 0.5 | 4.9 | 16.3 | 16.5 | 9.3 |
| $PEB_r$ / cm | 1.0 | 0.5 | 0.4 | 0.7 | 0.3 | 0.3 | 0.4 |
| $PEB_t$ / cm | 3.0 | 5.4 | 12.8 | 9.1 | 2.8 | 2.5 | 5.9 |
| MPC | N | W | S | E | Sec | Added | Omni |
| *LOS* | 30.6 | 16.4 | 17.9 | 11.7 | 33.0 | 31.0 | 25.4 |
| *plasterb east* | 6.3 | -∞ | -∞ | 12.1 | 12.8 | 13.1 | 11.0 |
| *plasterb west* | -1.1 | 3.4 | -5.4 | -∞ | 3.2 | 5.1 | 0.3 |
| *white board* | -1.1 | 18.3 | 15.9 | -0.4 | 19.4 | 20.3 | 11.1 |
| *window* | 5.1 | -5.0 | -∞ | -∞ | 5.8 | 5.5 | -1.5 |
| $PEB_r$ / cm | 0.2 | 0.6 | 0.6 | 1.1 | 0.1 | 0.2 | 0.3 |
| $PEB_t$ / cm | 3.4 | 2.2 | 3.3 | 5.5 | 1.7 | 1.6 | 3.4 |

Table II

| MPC | N | W | S | E | Sec | Added | Omni |
|---|---|---|---|---|---|---|---|
| *LOS* | 3.8 | 19.3 | 18.2 | 16.2 | 23.5 | 22.9 | 19.4 |
| *plasterb east* | -2.8 | -0.1 | 1.9 | 3.4 | 3.5 | 7.2 | 1.4 |
| *plasterb west* | -∞ | -0.4 | -∞ | -4.4 | -0.8 | 1.0 | -∞ |
| *window* | 10.8 | 2.2 | -5.0 | 3.2 | 11.6 | 12.1 | 4.4 |
| $PEB_r$ / cm | 7.9 | 3.1 | 3.6 | 4.3 | 1.9 | 2.0 | 3.0 |
| $PEB_t$ / cm | 23.9 | 30.6 | 76.0 | 28.2 | 18.5 | 15.3 | 44.9 |
| MPC | N | W | S | E | Sec | Added | Omni |
| *LOS* | 16.1 | 11.4 | 11.5 | 7.4 | 14.9 | 18.7 | 17.2 |
| *plasterb east* | 3.3 | 5.6 | 8.8 | 9.4 | 8.4 | 13.5 | 3.1 |
| *plasterb west* | 3.2 | 2.0 | -∞ | -6.5 | 3.0 | 5.9 | -0.6 |
| *white board* | 0.5 | 9.5 | 8.9 | 3.5 | 9.4 | 13.0 | 3.4 |
| *window* | -2.8 | -∞ | -6.7 | 3.3 | -2.0 | 4.6 | -11.9 |
| $PEB_r$ / cm | 4.4 | 5.8 | 5.5 | 7.3 | 4.3 | 2.7 | 3.9 |
| $PEB_t$ / cm | 18.7 | 18.9 | 24.6 | 17.8 | 15.7 | 9.8 | 27.5 |

Comparison of Tables I and II demonstrates that, in general, the SINR increases with higher signal bandwidth, justified by the improved separation of MPCs along the delay domain. Further, we can observe that the SINR of an individual directive antenna (N, W, S or E) is strongly dependent on the angle-of-departure of the MPC (see Fig. 1 which exemplifies the beampatterns of the directional antennas in addition to the angle-of-departure of the MPCs).

Consideration of a joint amplitude estimation is highly beneficial in terms of SINR as shown in column *Sec.* The SINR is clearly improved since it takes information obtained at *M* measurements into account. The sum of individual SINRs (*Added*) is seen to be an upper limit on the achievable performance. Hereby independent measurements of the DM of each antenna are required.

The tremendous advantage of the directional antennas is the potential to resolve MPCs in the spatial domain. This is justified by Tables I and II by comparison of the SINR values. Consider e.g. the MPCs *plasterb(oard) east* 8 and *white board* 10 using anchor position $a_2$. At a high bandwidth of $T_p$ = 0.5 ns (Table I) both MPCs are well separated in the delay domain and subsequently reasonably high SINR values (> 10 dB) are obtained. The omni-directional antenna reaches similar values compared to the combined sector antennas *Sec.* As soon as the bandwidth is reduced (Table II) both MPCs overlap and the SINRs using the omni-directional antenna suffer. Still, the sector antenna is able to gain additional spatial information, verified by the formidable improvement of *Sec* and *Added.*

Finally, Tables I and II report the evaluated PEB, radial ($PEB_r$) and tangential ($PEB_t$) to the angle-of-arrival of the line-of-sight (LOS). In general, the PEB is lower in direction of the LOS because the LOS is usually equipped with the highest SINR. Using the sector antennas, the tangential PEB reduces by up to a factor of three, still employing only one anchor node.

We conclude that the SINR is strongly dependent on the beampattern as well as the bandwidth. MPCs having an angle-of-departure within the antenna's mainlobe reach high SINRs. The combination of the antennas is superior since more channel measurements are used in combination with angular diversity.

c) Evaluation of the likelihood functions

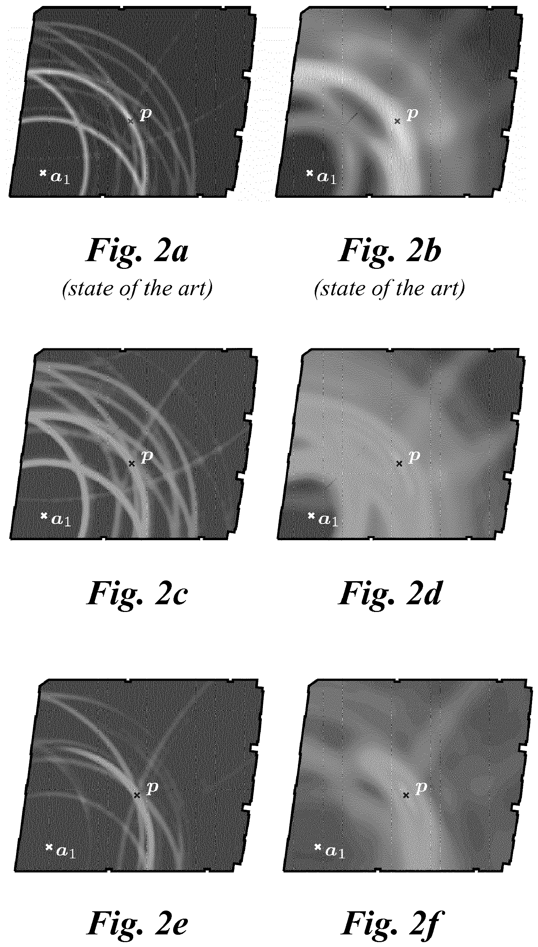

Figs. 2a to 2f illustrate the likelihood functions in log-domain using anchor 4 at position $a_1$ and pulse parameters of *s(t)* with high bandwidth ($T_p$, *R*) = (0.5 ns, 0.9) and low bandwidth (2.4 ns, 0.5) for positions within the communication range (compare to floorplan in Fig. 1). Brighter areas indicate a better model fit.

We can observe that higher bandwidth (Figs. 2a, 2c and 2e) yields a steeper likelihood than the lower bandwidth (Figs. 2b, 2d and 2f). The angular diversity of the sector antenna using equation (10) (Figs. 2c and 2d) and equation (12) (Figs. 2e and 2f) reduces some of the local maxima and thus the probability for outliers (Figs. 2a and 2b). The estimation of $\{\alpha_k\}$ in equation (12) (Figs. 2e and 2f) results in a more distinct likelihood function compared to the independent estimation of $\{\alpha_{k,m}\}$ in equation (10) (Fig. 2c and 2d) . The application of the directional antennas results in a distinct global maximum that is well separated from the local maxima as shown in Figs. 2e and 2f.

d) Evaluation of the position accuracy

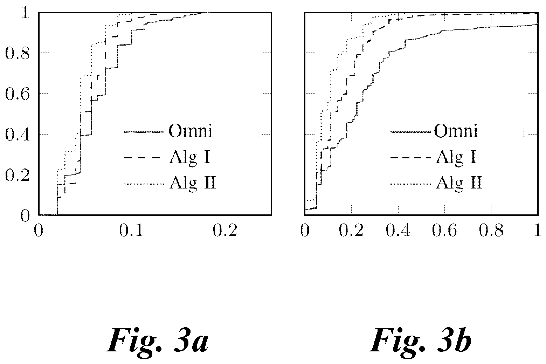

Finally, we investigate the performance of both position estimators using anchor 4 at position $a_1$ and 210 measurements of $\{r_m\}$ each at a different position $p_n$. All measurements were performed in LOS conditions, considering the MPCs evaluated in Tables I and II. The cumulative distribution functions of the distance between the true and estimated positions $\in = \|p_{\text{true}} - \hat{p}\|$ are shown in Figs. 3a and 3b. It confirms that a high bandwidth (Fig. 3a) is favourable for indoor positioning, with 90% of $\in$ below 10 cm. This reveals that the high bandwidth suffices to separate and utilize the multipath propagation.

Using a lower bandwidth (Fig. 3b) exemplifies the gain due to the directional antennas compared to the omni-directional antenna (cf. "Omni" in Figs. 3a and 3b). The latter one is not able to separate the MPCs well enough (compare the likelihood function in Fig. 2b) which results in a poor position error where the 90% limit of $\in$ is only at 50 cm. Using the sector antenna drastically reduces the position error. Algorithm I (cf. "Alg I" in Figs. 3a and 3b) gathers additional information due to angular diversity. The incorporation of the beampattern by Algorithm II (cf. "Alg II" in Figs. 3a and 3b) enables highly accurate indoor localization where the 90% limit of the position error is reduced to 20cm.

The invention is not limited to the embodiments described in detail above but comprises all variants, modifications and combinations thereof which fall into the scope of the appended claims.

**Claims**

1. A method for determining a position ($p_n$) of a movable agent device (3) in a reflective environment (2) of which a geometric model (1) is known and in which at least one anchor device (4, 5) has a predetermined position ($a_1$, $a_2$), comprising:

   transmitting a first ultra-wideband pulse signal via one of a first uni-directional antenna of a first device and an omni-directional antenna of a second device, wherein said first device is one of the agent device (3) and the anchor device (4) and said second device is the other one of the agent device (3) and the anchor device (4), and receiving a first received signal containing direct and/or reflected components of the transmitted first pulse signal via the other one of said first uni-directional antenna and said omni-directional antenna;

transmitting a second ultra-wideband pulse signal via one of a second uni-directional antenna of said first device and said omni-directional antenna, wherein the first and second uni-directional antennas have different directivities, and receiving a second received signal containing direct and/or reflected components of the transmitted second pulse signal via the other one of said second uni-directional antenna and said omni-directional antenna;

prior to, during or after said transmitting and receiving, defining a set of candidate positions within said geometric model (1), and, for each candidate position, calculating a set of multipath components, each having an amplitude and a delay, as a function of the geometric model (1), the directivities of the uni-directional antennas, the position ($a_1$) of the anchor device (4) and said candidate position;

determining, for each candidate position, a deviation measure between the multipath components calculated for said candidate position on the one hand and said first and second received signals on the other hand; and obtaining the position ($p_n$) of the agent device (3) as the candidate position with the minimum deviation measure.

2. The method of claim 1, **characterized in that** the first and second pulse signals are differently coded sequences of pulses, and **in that** said steps of transmitting the first and second pulse signals overlap in time.

3. The method of claim 1, **characterized in that** the first and second pulse signals are transmitted via the first and second uni-directional antennas, respectively, and **in that** said steps of transmitting the first and second pulse signals are executed sequentially.

4. The method of any one of the claims 1 to 3, **characterized in that** the deviation measure is determined using a method of least squares.

5. The method of any one of the claims 1 to 4, **characterized in that**, prior to obtaining the position ($p_n$) of the agent device (3), the steps of defining, calculating and determining are repeated for at least one further set of candidate positions in proximity of the candidate position with the minimum deviation measure of the preceding set.

6. The method of any one of the claims 1 to 5, **characterized in that** said deviation measure is determined using a likelihood function, the minimum deviation corresponding to a maximum likelihood determined according to

$$\hat{p}_{\text{Alg1}} = \operatorname*{argmax}_{p \in \mathcal{P}} \prod_m p(r_m | p)$$

wherein

$P$ is the set of candidate positions $p$;
$r_m$ is a vector of samples of the received signals of the $m^{th}$ uni-directional antenna of the first device, which is modelled as $r_m = S(\tau)\alpha_m + w_m$;
$S(\tau)$ is a matrix of the transmitted pulse signals with delays $\tau$ corresponding to a set of $K$ multipath components;
$\alpha_m$ is a vector of the amplitudes of said multipath components transmitted or received via the $m^{th}$ antenna; and
$w_m$ is a vector of noise of said $m^{th}$ antenna.

7. The method of any one of the claims 1 to 5, **characterized in that** said deviation measure is determined using a likelihood function, the minimum deviation measure corresponding to a maximum likelihood determined according to

$$\hat{p}_{\text{Alg2}} = \operatorname*{argmax}_{p \in \mathcal{P}} p(r | p)$$

wherein

$P$ is the set of candidate positions $p$;
$r$ is a vector of samples of the received signals, transmitted or received via the uni-directional antennas of the first device, which is modelled as $r = X(\tau, \{b_m(\phi_k)\})\alpha + \omega$;
$X(\tau, \{b_m(\phi_k)\})$ is a matrix containing the transmitted pulse signals and the directivities with

$$X(\boldsymbol{\tau}, \{b_m(\phi_k)\}) = \begin{bmatrix} b_1(\phi_1)\boldsymbol{s}(\tau_1) & \ldots & b_1(\phi_K)\boldsymbol{s}(\tau_K) \\ \vdots & & \vdots \\ b_M(\phi_1)\boldsymbol{s}(\tau_1) & \ldots & b_M(\phi_K)\boldsymbol{s}(\tau_K) \end{bmatrix};$$

$b_m(\phi_k)$ is the directivity of the $m^{th}$ uni-directional antenna of the first device;

$\phi_k$ is an angle of departure or arrival of the $k^{th}$ multipath component at the first device;

$\boldsymbol{s}(\tau_k)$ is a signal vector of the transmitted pulse signal with delay $\tau_k$ of the $k^{th}$ multipath component;

$\alpha$ is a vector of the amplitudes of the multipath components; and

$\boldsymbol{w}$ is a vector of noise of the uni-directional antennas.

8. The method of any one of the claims 1 to 7, **characterized in that** the number of multipath components in said set is determined on the basis of a signal to interference plus noise ratio falling below a given threshold, said ratio being estimated according to

$$\mathrm{SINR}_{k,m} = \frac{|\alpha_k|^2 |b_m(\phi_k)|^2}{N_0 + T_{\mathrm{p}} \int_\phi |b_m(\phi)|^2 S_\nu(\tau_k, \phi)\, \mathrm{d}\phi}$$

wherein

$\mathrm{SINR}_{k,m}$ is the signal to interference plus noise ratio of the $k^{th}$ multipath component and the $m^{th}$ uni-directional antenna of the first device;

$\alpha_k$ is the amplitude of the $k^{th}$ multipath component;

$b_m(\phi_k)$ is the directivity of the $m^{th}$ uni-directional antenna of the first device;

$\phi_k$ is an angle of departure or arrival of the $k^{th}$ multipath component at the first device;

$\tau_k$ is the delay of the $k^{th}$ multipath component;

$N_0$ denotes noise;

$T_p$ is an effective pulse duration of the transmitted pulse signal; and

$S_\nu(\tau_k, \phi)$ is a delay-angle power spectrum describing the power of the interfering (diffuse) multipath components.

9. The method of any one of the claims 1 to 8, **characterized in that** in said step of determining the deviation measure each of the multipath components in said set is weighted on the basis of the signal to interference plus noise ratio estimated according to

$$\mathrm{SINR}_{k,m} = \frac{|\alpha_k|^2 |b_m(\phi_k)|^2}{N_0 + T_{\mathrm{p}} \int_\phi |b_m(\phi)|^2 S_\nu(\tau_k, \phi)\, \mathrm{d}\phi}$$

wherein

$\mathrm{SINR}_{k,m}$ is the signal to interference plus noise ratio of the $k^{th}$ multipath component and the $m^{th}$ uni-directional antenna of the first device;

$\alpha_k$ is the amplitude of the $k^{th}$ multipath component;

$b_m(\phi_k)$ is the directivity of the $m^{th}$ uni-directional antenna of the first device;

$\phi_k$ is an angle of departure or arrival of the $k^{th}$ multipath component at the first device;

$\tau_k$ is the delay of the $k^{th}$ multipath component;

$N_0$ denotes noise;

$T_p$ is an effective pulse duration of the transmitted pulse signal; and

$S_\nu(\tau_k, \phi)$ is a delay-angle power spectrum describing the power of the interfering (diffuse) multipath components.

10. A system for determining a position of a movable agent device (3) in a reflective environment (2), comprising:

said agent device (3), and
at least one anchor device (4) at a predetermined position in said environment (2),
wherein the system (6) is configured to execute the method of any one of the claims 1 to 9, wherein one of the agent device (3) and the anchor device (4) is said first device and the other one of the agent device (3) and the anchor device (4) is said second device.

11. The system of claim 10, **characterised in that** said uni-directional antennas are switched beam antennas.

**Fig. 1**

**Fig. 2a**

*(state of the art)*

**Fig. 2b**

*(state of the art)*

**Fig. 2c**

**Fig. 2d**

**Fig. 2e**

**Fig. 2f**

*Fig. 3a*

*Fig. 3b*

**EP 3 418 761 A1**

Europäisches
Patentamt

European
Patent Office

Office européen
des brevets

## EUROPEAN SEARCH REPORT

Application Number

EP 17 17 7179

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | WITRISAL KLAUS ET AL: "High-Accuracy Localization for Assisted Living: 5G systems will turn multipath channels from foe to friend", IEEE SIGNAL PROCESSING MAGAZINE, IEEE SERVICE CENTER, PISCATAWAY, NJ, US, vol. 33, no. 2, 1 March 2016 (2016-03-01), pages 59-70, XP011609443, ISSN: 1053-5888, DOI: 10.1109/MSP.2015.2504328 [retrieved on 2016-03-04] | 1-5,10, 11 | INV. G01S5/02 |
| A | * page 61 - page 67; figures 3-7 * | 6-9 | |
| X | WITRISAL KLAUS ET AL: "High-accuracy positioning for indoor applications: RFID, UWB, 5G, and beyond", 2016 IEEE INTERNATIONAL CONFERENCE ON RFID (RFID), IEEE, 3 May 2016 (2016-05-03), pages 1-7, XP032909976, DOI: 10.1109/RFID.2016.7487999 [retrieved on 2016-06-08] * Section II, "ranging and positioning in dense multipath".; figures 4-8 * | 1,10,11 | |
| | | | TECHNICAL FIELDS SEARCHED (IPC) |
| | | | G01S |
| A | MEISSNER PAUL ET AL: "UWB for Robust Indoor Tracking: Weighting of Multipath Components for Efficient Estimation", IEEE WIRELESS COMMUNICATIONS LETTERS, IEEE, PISCATAWAY, NJ, USA, vol. 3, no. 5, 1 October 2014 (2014-10-01), pages 501-504, XP011561161, ISSN: 2162-2337, DOI: 10.1109/LWC.2014.2341636 [retrieved on 2014-10-09] * the whole document * | 1-11 | |

-/--

The present search report has been drawn up for all claims

| Place of search | Date of completion of the search | Examiner |
|---|---|---|
| Munich | 8 December 2017 | Fanjul Caudevilla, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

# EUROPEAN SEARCH REPORT

Application Number

EP 17 17 7179

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | PAUL MEISSNER ET AL: "UWB positioning with virtual anchors and floor plan information", POSITIONING NAVIGATION AND COMMUNICATION (WPNC), 2010 7TH WORKSHOP ON, IEEE, PISCATAWAY, NJ, USA, 11 March 2010 (2010-03-11), pages 150-156, XP031812020, ISBN: 978-1-4244-7158-4 * the whole document * | 1-11 | |

TECHNICAL FIELDS
SEARCHED (IPC)

The present search report has been drawn up for all claims

| Place of search | Date of completion of the search | Examiner |
|---|---|---|
| Munich | 8 December 2017 | Fanjul Caudevilla, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **K. WITRISAL et al.** Bandwidth scaling and diversity gain for ranging and positioning in dense multipath channels. *IEEE Wireless Communications Letters,* August 2016, vol. 5 (4), 396-399
- **K. WITRISAL et al.** High-accuracy localization for assisted living. *IEEE Signal Processing Magazine,* 2016
- **Y. SHEN et al.** On the accuracy of localization systems using wideband antenna arrays. *IEEE Transactions on Communications,* January 2010, vol. 58 (1), 270-280
- **Y. HAN et al.** Performance limits and geometric properties of array localization. *IEEE Transactions on Information Theory,* February 2016, vol. 62 (2), 1054-1075
- **B. ALLEN et al.** Ultra wideband antennas and propagation for communications, radar and imaging. John Wiley & Sons, 2006
- **A. CIDRONALI et al.** Analysis and performance of a smart antenna for 2.45-GHz single-anchor indoor positioning. *IEEE Transactions on Microwave Theory and Techniques,* 2010, vol. 58 (1), 21-31

- Switched beam antenna design principles for angle of arrival estimation. **G. GIORGETTI et al.** Wireless Technology Conference, 2009. EuWIT 2009. European. IEEE, 2009, 5-8
- **Y. SHEN et al.** Fundamental limits of wideband localization; part I: a general framework. *IEEE Transactions on Information Theory,* 2010
- **E. LEITINGER et al.** Evaluation of positionrelated information in multipath components for indoor positioning. *IEEE Journal on Selected Areas in Communications,* 2015
- **G. H. GOLUB et al.** The differentiation of pseudo-inverses and nonlinear least squares problems whose variables separate. *SIAM Journal on numerical analysis,* 1973, vol. 10 (2), 413-432
- **J. KULMER et al.** Using DecaWave UWB Transceivers for High-accuracy Multipath-assisted Indoor Positioning. *IEEE ICC 2017 Workshop on Advances in Network Localization and Navigation (ANLN),* 2017